Europäisches Patentamt

European Patent Office

Office européen des brevets

(11) Veröffentlichungsnummer: **0 384 367**
**A2**

## EUROPÄISCHE PATENTANMELDUNG

(21) Anmeldenummer: 90103178.1

(22) Anmeldetag: 20.02.90

(51) Int. Cl.$^5$: **C08L 51/06, C10L 1/18, C10L 1/14**

(30) Priorität: 24.02.89 DE 3905681

(43) Veröffentlichungstag der Anmeldung:
29.08.90 Patentblatt 90/35

(84) Benannte Vertragsstaaten:
**AT BE DE ES FR GB IT NL SE**

(71) Anmelder: **BASF Aktiengesellschaft
Carl-Bosch-Strasse 38
D-6700 Ludwigshafen(DE)**

(72) Erfinder: **Konrad, Gerd, Dr.
Albert-Einstein-Allee 33
D-6703 Limburgerhof(DE)**
Erfinder: **Hartmann, Heinrich, Dr.
Weinheimer Strasse 46
D-6703 Limburgerhof(DE)**
Erfinder: **Zarate, Jacobo, Dr.
Mozartstrasse 20
D-6720 Speyer(DE)**

(54) **Konzentrierte Mischungen von Pfropfcopolymerisaten aus Estern von ungesättigten Säuren und Ethylen-Vinylester-Copolymerisaten.**

(57) Die vorliegende Erfindung betrifft konzentrierte Mischungen, enthaltend (i) ein organisches Lösungsmittel, (ii) ein niedermolekulares Pfropfcopolymerisat der allgemeinen Formel I und (iii) ein höhermolekulares Pfropfcopolymerisat der allgemeinen Formel I

A - E    I,

worin A für ein Segment aus einem Polymeren steht, das zu 70 bis 100 Gew.% aus Monomereneinheiten der allgemeinen Formel II und zu 0 bis 30 Gew.% aus Monomereneinheiten der allgemeinen Formel III besteht

$XHC = CR_1 Y$    II

$CH_2 = CR_1 Z$    III,

in denen

$R_1$ den Rest H oder $CH_3$ bedeutet,

X den Rest H, COOH oder $COOR_2$ bedeutet,

Y den Rest COOH oder $COOR_2$ bedeutet oder

X und Y für den Anhydridrest CO-O-CO stehen,

Z den Rest $OCOR_2$, $OR_2$, einen heterocyclischen 5- bis 6-gliedrigen Ring oder den Rest $CO-B-D-R_3$ bedeutet, wobei

$R_2$ den Rest $C_1$- bis $C_{40}$-Alkyl bedeutet,

B den Rest O oder NH bedeutet,

D für eine $C_2$- bis $C_{10}$-Kohlenwasserstoffbrücke steht und

$R_3$ den Rest OH oder $N(R_2)_2$ mit der oben angegebenen Bedeutung für $R_2$ bedeutet,

und worin E für ein Segment aus einem Copolymeren des Ethylens mit Vinylestern von aliphatischen $C_1$- bis $C_{24}$-Carbonsäuren steht, und (iv) gegebenenfalls ein Polymer, welches nur aus den Segmenten A besteht.

## Konzentrierte Mischungen von Pfropfcopolymerisaten aus Estern von ungesättigten Säuren und Ethylen-Vinylester-Copolymerisaten

Die vorliegende Erfindung betrifft konzentrierte Mischungen von Pfropfcopolymerisaten aus Estern von ungesättigten Säuren wie (Meth)acrylsäureester und Ethylen-Vinylester-Copolymerisaten und deren Verwendung als Fließverbesserer und Stockpunktserniedriger für Rohöle, Rückstandsöle und Mitteldestillate.

Je nach ihrer Herkunft können Erdöle beträchtliche Mengen an Paraffinen (die auch als Wachs bezeichnet werden) enthalten. Bei den in der Lagerstätte herrschenden Temperaturen liegen die Paraffine in gelöster Form vor. Kühlt das Erdöl, beispielsweise beim Transport in einer Pipeline oder bei Lagerung in einem Tank ab, so können sich die gelösten Paraffine allmählich abscheiden. Dabei bilden sie oft räumliche Strukturen aus, die große Mengen des Erdöls zu binden vermögen. Dabei wird die Zähigkeit des Erdöls erhöht, bei ausreichend tiefen Temperaturen kann sich das Erdöl sogar völlig verfestigen. Für die in Raffinerien anfallenden Rückstandsöle, auch als "long residues" bezeichnet, trifft dies in verstärktem Maße zu, da sie an niedersiedenden Komponenten destillativ abgereichert sind und deshalb einen höheren Wachsgehalt aufweisen.

Insbesondere beim Transport von Erdöl durch Pipelines wirkt sich dieses Verhalten sehr nachteilig aus. Durch Paraffinausscheidungen können sich Durchflußhindernisse bilden, die eine starke Pumpkraft erfordern. Dies kann zu hohen Transportkosten führen, insbesondere bei Pipelines, die über lange Strecken führen. Ist der Widerstand zu hoch, kann das Erreichen des zulässigen Höchstdruckes ein Abschalten der Förderung erzwingen.

Ebenso kann bei Unterbrechung der Förderung durch Kristallisation der Paraffine beim Abkühlen des Erdöls die Zähigkeit so stark zunehmen, daß eine Wiederaufnahme der Förderung nicht mehr möglich ist, da entweder die Pumpen den erforderlichen Anfahrdruck, der um ein Vielfaches höher ist als der reguläre Förderdruck, nicht mehr aufbringen können, oder die Pipeline dem Anfahrdruck nicht standhalten kann.

Es ist daher von großer Bedeutung, die Beeinträchtigung der Fließeigenschaften des Erdöls oder anderer Paraffine enthaltender Öle wie Rückstandsöle oder Mitteldestillate durch Wachs auf ein Minimum zu beschränken. Das kann dadurch erreicht werden, daß dem Öl niedersiedende Erdölfraktionen, wie z.B. Diesel oder Kerosin, zugesetzt werden, so daß durch die Verdünnung die Paraffine beim Abkühlen in Lösung gehalten werden. Lagereinrichtungen können zudem beheizbar ausgelegt werden, so daß das Auskristallisieren der Paraffine durch die höhere Temperatur verhindert wird. Diese Arbeitsweisen sind jedoch energieintensiv und deshalb in vielen Fällen unwirtschaftlich. Es bestand daher die Aufgabe, geeignete Additive zu finden, die bei möglichst geringer Einsatzmenge die Kristallisation der Paraffine beim Abkühlen des Erdöls und anderer Öle verhindern, bzw. die sich bildenden Kristalle derart modifizieren, daß die Fließeigenschaften der Öle nicht in negativer Weise beeinflußt werden.

Für den technischen Einsatz werden verstärkt Additive gefordert, die bei Temperaturen um 25°C flüssig sind und einen möglichst hohen Polymerisatgehalt aufweisen. Um eine einfache Dosierung von mehrkomponentigen Additiven zu gewährleisten, sollten alle Komponenten in einem einzigen Additiv in makroskopisch homogener Form enthalten sein. Dies gewährleistet zudem die schnelle Mischung mit und Auflösung in den wachshaltigen Ölen, was eine wichtige Voraussetzung für die Wirksamkeit des Additivs darstellt.

Neben anderen haben sich bisher vor allem zwei Polymerklassen als wirksame Stockpunktserniedriger und Fließverbesserer für Erdöle erwiesen. Die erste Gruppe umfasst polymere Ester aus ungesättigten mono- oder difunktionellen Carbonsäuren und langkettigen Alkanolen, wie z.B. Polyalkyl(meth)acrylate (vgl. US 3,669,189; US 3,729,296). Die zweite Gruppe umfasst Copolymere aus Ethylen und Vinylestern von $C_1$- bis $C_4$-Fettsäuren mit einem Vinylestergehalt von ca. 10 bis 40 Gew.% (vgl. US 3,567,639, US 3,669,189). Diese Polymere werden allgemein als EVA-Polymere bezeichnet.

US 3,726,653 beschreibt Mischungen von Polyalkylacrylaten und EVAPolymeren, die sich durch die synergistische Wirkung der beiden Komponenten auszeichnen. Aus JP-OS 53593/84 (Chem. Abstr. 101, 133833z) sind PfropfcoPolymere aus EVA-Polymeren und $C_3$- bis $C_{21}$-Alkylacrylaten und/oder Styrol bzw. alkylierten Derivaten und deren Verwendung als Fließverbesserer für Mitteldestillate und Erdöle bekannt.

Lösungen von höhermolekularen Ethylen-Vinylacetat-Copolymeren in aromatischen Lösungsmitteln sind nur bis zu Polymerisatgehalten von etwa 10 bis 15 Gew.% bei Raumtemperatur fließfähig und handhabbar. Poly-(meth)acrylsäureester von $C_{16}$- bis $C_{28}$- Fettalkoholen werden bei Temperaturen wenig unterhalb der Raumtemperatur ebenfalls fest.

Wie oben angeführt, erniedrigt die Kombination von Ethylen-Vinylacetat-Copolymeren und Poly-Alkyl-(meth)acrylaten nach US 3,726,653 den Stockpunkt von Erdölen besonders wirkungsvoll. Werden die beiden Polymersysteme jedoch in einem Lösungsmittel gemischt, kommt es wegen der Unverträglichkeit der beiden Polymersysteme zur Phasentrennung, wobei sich das EVA-Copolymere in gelatinöser Form am Boden der Gefäße abscheidet. Eine solche Mischung ist technisch nicht zu verwerten.

In der DE-OS 3,613,247 werden stabile konzentrierte Emulsionen aus Ethylen-Vinylester-Copolymeren beschrieben. Sie werden durch Dispergieren von EVA-Polymeren und/oder Poly-Alkyl(meth)acrylaten in einem Trägermedium, in welchem die Polymeren nicht löslich sind, erhalten. Als Dispergatoren werden u.a. Block- oder Pfropfcopolymerisate aus EVAPolymeren und Alkyl(meth)acrylaten verwendet. Die bekannten Systeme sind jedoch nicht befriedigend.

Es wurde nun ein vorteilhaftes System für die Verwendung als Fließverbesserer und Stockpunktserniedriger für wachshaltige Öle gefunden. Gegenstand der Erfindung sind konzentrierte Mischungen, enthaltend (i) ein organisches Lösungsmittel, (ii) ein niedermolekulares Pfropfcopolymerisat der allgemeinen Formel I und (iii) ein höhermolekulares Pfropfcopolymerisat der allgemeinen Formel I

$A - E \quad I$,

worin A für ein Segment aus einem Polymeren steht, das zu 70 bis 100 Gew.% aus Monomereneinheiten der allgemeinen Formel II und zu 0 bis 30 Gew.% aus Monomereneinheiten der allgemeinen Formel III besteht

$XHC = CR_1Y \quad II$

$CH_2 = CR_1Z \quad III$,

in denen

$R_1$ den Rest H oder $CH_3$ bedeutet,

X den Rest H, COOH oder $COOR_2$ bedeutet,

Y den Rest COOH oder $COOR_2$ bedeutet oder

X und Y für den Anhydridrest CO-O-CO stehen,

Z den Rest $OCOR_2$, $OR_2$, einen heterocyclischen 5- bis 6-gliedrigen Ring oder den Rest $CO-B-D-R_3$ bedeutet,

wobei

$R_2$ den Rest $C_1$- bis $C_{40}$-Alkyl bedeutet,

B den Rest O oder NH bedeutet,

D für eine $C_2$- bis $C_{10}$-Kohlenwasserstoffbrücke steht und

$R_3$ den Rest OH oder $N(R_2)_2$ mit der oben angegebenen Bedeutung für $R_2$ bedeutet,

und worin E für ein Segment aus einem Copolymeren des Ethylens mit Vinylestern von aliphatischen $C_1$- bis $C_{24}$-Carbonsäuren steht, und (iv) gegebenenfalls ein Polymer, welches nur den Segmenten A entspricht.

Die erfindungsgemäßen konzentrierten Mischungen, die ein organisches Lösungsmittel und je ein niedermolekulares und ein höhermolekulares Pfropfcopolymerisat aus Estern von ungesättigten Säuren, z.B. (Meth)acrylsäureester, und EVA-Polymeren enthalten, ergeben Lieferformen, die auch bei längerer Lagerung bei üblichen Umgebungstemperaturen stabil bleiben und ihre Fließfähigkeit behalten und zu keiner Abscheidung von Polymeren führen. Weiter liegen die Polymerisate in einer solchen Form vor, daß sie bei der Zugabe zu den wachshaltigen Ölen oder bei der Zugabe von weiterem Lösungsmittel zu den konzentrierten Mischungen leicht und schnell in Lösung gehen. Gleichzeitig bewirkt die Verwendung der erfindungsgemäßen Mischung aus einem niedermolekularen Pfropfpolymerisat und einem höhermolekularen Pfropfpolymerisat einen synergistischen Effekt bezüglich der Verbesserung des Fließverhaltens und der Stockpunktserniedrigung der wachshaltigen Öle, indem die Kombination von nieder- und höhermolekularem Pfropfcopolymerisat eine höhere Wirkung zeigt als die Summe der Einzelwirkungen von niedermolekularem Pfropfpolymerisat und höhermolekularem Pfropfcopolymerisat.

Als organische Lösungsmittel für die erfindungsgemäßen konzentrierten Mischungen werden im allgemeinen aliphatische und vorzugsweise aromatische Kohlenwasserstoffe verwendet. Geeignete aliphatische Kohlenwasserstoffe sind beispielsweise Benzinfraktionen wie Leichtbenzin, Naphtha, Mittelbenzin, Ligroin, Kerosin, Dieselöl, Gasöl. Als aromatische Kohlenwasserstoffe kommen z.B. Benzol, Toluol, Xylol, Alkylbenzole und deren Gemische in Betracht. Die organischen Lösungsmittel werden im allgemeinen in solchen Mengen verwendet, daß der Gesamtpolymergehalt der erfindungsgemäßen konzentrierten Mischung 20 bis 70 Gew.%. vorzugsweise 20 bis 65 Gew.%, insbesondere 25 bis 60 Gew.%, beträgt.

Die erfindungsgemäßen konzentrierten Mischungen enthalten neben dem organischen Lösungsmittel je ein niedermolekulares Pfropfcopolymerisat und ein höhermolekulares Pfropfcopolymerisat der allgemeinen Formel I

$A - E \quad I$,

worin A für ein Segment aus einem Polymeren (Polymer A) steht, das zu 70 bis 100 Gew.%, vorzugsweise 80 bis 100 Gew.%, aus Monomereneinheiten der allgemeinen Formel II und zu 0 bis 30 Gew.%, vorzugsweise 0 bis 20 Gew.% aus Monomereneinheiten der allgemeinen Formel III besteht

$XHC = CR_1Y \quad II$

$CH_2 = CR_1 Z$     III,

in denen

$R_1$ den Rest H oder $CH_3$ bedeutet,

X den Rest H, COOH oder $COOR_2$ bedeutet,

Y den Rest COOH oder $COOR_2$ bedeutet oder

X und Y für den Anhydridrest CO-O-CO stehen,

Z den Rest $OCOR_2$, $OR_2$, einen heterocyclischen 5- bis 6-gliedrigen Ring oder den Rest $CO-B-D-R_3$ bedeutet,

wobei

$R_2$ den Rest $C_1$- bis $C_{40}$-Alkyl bedeutet,

B den Rest O oder NH bedeutet,

D für eine $C_2$- bis $C_{10}$-Kohlenwasserstoffbrücke steht und

$R_3$ den Rest OH oder $N(R_2)_2$ mit der oben angegebenen Bedeutung für $R_2$ bedeutet.

Geeignete Monomere der allgemeinen Formel II sind beispielsweise Mono- und Di-Alkylmaleinate und Mono- und Di-Alkylfumarate, Maleinsäureanhydrid und Alkyl(meth)acrylate mit im allgemeinen $C_1$- bis $C_{40}$-, vorzugsweise $C_1$- bis $C_{34}$-, insbesondere $C_8$- bis $C_{24}$-Alkylgruppen. Vorzugsweise werden Ester der (Meth)-acrylsäure mit $C_1$- bis $C_{40}$-, vorzugsweise $C_1$- bis $C_{34}$-, insbesondere $C_8$- bis $C_{24}$-Alkoholen, deren Alkylketten zu 0 bis 20 Gew.% verzweigt sein können, verwendet. Im allgemeinen sind diese Alkohole im wesentlichen primäre Alkohole, z.B. mit einem Gehalt von 80 bis 100 Gew.% an primären Alkoholen, die jedoch zu 0 bis 20 Gew.% sekundäre Alkohole enthalten können.

Bei den Monomeren der allgemeinen Formel II handelt es sich im wesentlichen um Ester von ungesättigten Säuren und Alkoholen, die nach den bekannten Verfahren zur Veresterung erhalten werden können. Beispielsweise werden die Alkyl(meth)acrylate in der Weise erhalten, daß man eine Lösung aus (Meth)acrylsäure und einem Alkanol in einem organischen Lösungsmittel, vorzugsweise in dem Lösungsmittel, in dem später die polymerisation zu den Pfropfcopolymerisaten durchgeführt wird, unter Zusatz der üblichen Polymerisationsinhibitoren, z.B. Hydrochinonderivaten, und Veresterungskata lysatoren wie Schwefelsäure, p-Toluolsulfonsäure zum Sieden erhitzt und das gebildete Reaktionswasser durch azeotrope Destillation entfernt. Zur Reinigung der Ester, insbesondere zum Entfernen der zugesetzten Inhibitoren und überschüssiger (Meth)acrylsäure, kann die Esterlösung mit alkalischen Mitteln, z.B. mit verdünnter Natronlauge oder Natriumcarbonat lösung, und anschließend mit Wasser gewaschen werden.

Geeignete Monomere der allgemeinen Formel III sind z.B. Vinylalkylester, Alkylamino(meth)acrylate, Alkylamino(meth)acrylamide sowie Vinylheterocyclen wie Vinylpyridin, Vinylpyrrolidon, Vinylcarbazol, Vinylimidazol und deren Alkylderivate.

In der allgemeinen Formel I steht E für ein Segment aus einem Copolymeren des Ethylens mit Vinylestern von aliphatischen im allgemeinen gesättigten $C_1$- bis $C_{24}$-Carbonsäuren, vorzugsweise von aliphatischen $C_1$- bis $C_4$-Carbonsäuren (EVA-Polymere). Die EVA-Polymeren sind an sich bekannt (vgl. US-PS 33 82 055). Bei ihrer Herstellung können auch unter sich verschiedene Vinylester gleichzeitig zur Anwendung kommen. Sie können z.B. durch Masse-, Emulsions- oder Lösungspolymerisation hergestellt werden. Genannt seien als Comonomere beispielsweise Vinylester der Essigsäure, Propionsäure, Buttersäure, 2-Ethylhexancarbonsäure, Pelargonsäure, Stearinsäure, insbesondere $C_2$- bis $C_4$-Carbonsäuren, wobei Vinylacetat besonders bevorzugt wird. Im allgemeinen liegt der Vinylestergehalt im Bereich von 10 bis 80 Gew.% vorzugsweise 15 bis 45 Gew.%, d.h. der Ethylengehalt beträgt entsprechend 20 bis 90 Gew.%, vorzugsweise 55 bis 85 Gew.%. Der Schmelzviskositätsindex nach ASTM D 1238 beträgt im allgemeinen 1 bis 800 g/10 min, vorzugsweise 10 bis 400 g/10 min, insbesondere 15 bis 100 g/10 min.

Die Pfropfcopolymerisate der allgemeinen Formel I werden im allgemeinen durch übliche radikalische Pfropfpolymerisation durch Aufpfropfen der Monomeren gemäß der allgemeinen Formel II und gegebenenfalls III auf EVA-Polymere erhalten. Beispielsweise wird eine Lösung des EVA-Polymeren, z.B. des Ethylen-Vinylacetat-Copolymeren, in einem organischen Lösungsmittel, z.B. in einem aliphatischen und vorzugsweise aromatischen Kohlenwasserstoff wie Benzol, Toluol, Xyxlol oder andere Alkylbenzole oder deren Mischungen zweckmäßig unter einem Inertisierungsmittel wie Stickstoff oder Kohlendioxid mit Initiator und einem Teil der Monomeren gemäß der allgemeinen Formel II und gegebenenfalls III versetzt und der Rest der Monomeren sowie weiterer Initiator im Verlauf von mehreren Stunden, z.B. 2 bis 8 Stunden, zugefügt. Die radikalische Polymerisation kann auch in der sogenannten batch-Fahrweise durchgeführt werden, bei der das Ethylen-Vinylacetat-Copolymere und die gesamte Menge der Monomeren gemäß Formeln II und gegebenenfalls III vorgelegt werden und dann Initiator über mehrere Stunden zudosiert wird. Die Polymerisationsreaktion wird zweckmäßig bei Temperaturen zwischen 50 und 200°C, bevorzugt zwischen 60 und 130°C, durchgeführt. Als Initiatoren werden im allgemeinen, in Abhängigkeit von der Polymerisationstemperatur, Peroxo- oder Azoinitiatoren, z.B. tert.-Butyl-perpivalat, tert.-Butyl-peroctoat, tert.-Butylperbenzoat, Dibenzoyl-peroxid, Dicumylperoxid, Di-tert.-Butylperoxid, Cumolhydroperoxid, tert.-Butylhydroperoxid oder 2,2'-Azobis(2,4-dimethyl-valero-nitril), 2,2'-Azobisisobutyronitril zweckmäßig in Mengen zwischen 0,05 und 5 Gew.%, bevorzugt zwischen 0,1 und 1 Gew.%, bezogen auf die eingesetzten Monomeren, eingesetzt. Weiter sind auch Redox-Systeme wie beispielsweise Benzoin, Dimethylanilin, Ascorbinsäure sowie organisch lösliche Komplexe von Schwermetallen wie Kupfer, Kobalt, Mangan, Eisen, Nickel und Chrom als Initiatoren geeignet, oder es kann durch Mitverwendung solcher RedoxSysteme als Coinitiatoren die Reaktion beschleunigt werden. Die üblicherweise eingesetzten Mengen liegen bei 0,1 bis 2000 Gew.-ppm, vorzugsweise 0,1 bis 1000 Gew.-ppm. Bei der Wahl des Initiators bzw. des Initiatorsystems ist es zweckmäßig, bei der gewählten Polymerisationstemperatur darauf zu achten, daß die Halbwertszeit des Initiators oder des Initiatorsystems weniger als 3 Std. beträgt. Bei 150°C ist beispielsweise die Halbwertszeit von tert.-Butylhydroperoxid weniger als 3 Std. Das Initiatorsystem 1 Gew.% tert.-Butylhydroperoxid/5 Gew.-ppm Kupfer-II-Acetylacetonat besitzt dagegen schon bei 100°C ein vergleichbares Polymerisationsverhalten wie 1 Gew.% tert.-Butylhydroperoxid bei 150°C. Wird beispielsweise bei niedriger Temperatur anpolymerisiert und bei höherer Temperatur auspolymerisiert, wird in der Regel mit 2 oder mehr Initiatoren gearbeitet.

Zur Erzielung niedermolekularer Pfropfcopolymerisate ist es oftmals zweckmäßig, in Gegenwart von Reglern zu arbeiten. Geeignete Regler sind beispielsweise Allylverbindungen wie Allylalkohol, Buten-1-ol-3 und vorzugsweise organische Merkaptoverbindungen wie 2-Merkaptoethanol, 2-Merkaptopropanol, Merkaptoessigsäure, Merkaptopropionsäure, tert.-Butylmerkaptan, n-Butylmerkaptan, n-Octylmerkaptan, n-Dodecylmerkaptan und tert.-Dodecylmerkaptan, die im allgemeinen in Mengen von 0,1 Gew.% bis 10 Gew.% eingesetzt werden.

Für die Polymerisation geeignete Apparaturen sind z.B. übliche Rührkessel mit beispielsweise Anker-, Blatt-, Impeller- oder Mehrstufenimpuls-Gegen-strom-Rührer und für die kontinuierliche Herstellung Rührkesselkaskaden, Rohrreaktoren und statische Mischer.

In den Pfropfcopolymerisaten der allgemeinen Formel I beträgt das Verhältnis der Segmente A zu den Segmenten E im allgemeinen 20 bis 95 Gew.%, vorzugsweise 60 bis 95 Gew.%, insbesondere 70 bis 90 Gew.% Segment A und 5 bis 80 Gew.%, vorzugsweise 5 bis 40 Gew.%, insbesondere 10 bis 30 Gew.% Segment E.

Es ist ein wesentliches Merkmal der vorliegenden Erfindung, daß die konzentrierten Mischungen je ein niedermolekulares und ein höhermolekulares Pfropfcopolymerisat der allgemeinen Formel I enthalten. Die nieder molekularen und höhermolekularen Pfropfcopolymerisate werden je nach Wahl der Initiatoren, Co-Initiatoren, Regler, Polymerisationstemperaturen und des Molekulargewichts des eingesetzten EVA-Polymeren als niedermolekulares oder höhermolekulares Pfropfcopolymerisat erhalten. So werden für die Herstellung der niedermolekularen Pfropfcopolymerisate zweckmäßig Regler zugesetzt. Das Gewichtsverhältnis des niedermolekularen Pfropfcopolymerisats zum höhermolekularen Pfropfcopolymerisat beträgt in den erfindungsgemäßen konzentrierten Mischungen im allgemeinen 1:10 bis 100:1, vorzugsweise 2:1 bis 40:1, insbesondere 5:1 bis 30:1. Die Segmente A und E können in den niedermolekularen und höhermolekularen Pfropfcopolymerisaten gleich oder verschieden sein. Durch eine entsprechende Kombination der Segmente A und E in den nieder- und höhermolekularen Pfropfpolymerisaten läßt sich die Wirksamkeit der erfindungsgemäßen konzentrierten Mischungen in bezug auf die Verbesserung des Fließverhaltens und Erniedrigung des Stockpunktes je nach den Erfordernissen des jeweils vorliegenden Öls anpassen und optimieren.

Im allgemeinen werden solche konzentrierten Mischungen verwendet, bei denen die in der Mischung enthaltenen niedermolekularen Pfropfcopolymerisate solchen Pfropfcopolymerisaten entsprechen, wie sie durch Aufpfropfen der Monomeren gemäß der allgemeinen Formel II und III auf EVA-Polymeren unter solchen Reaktionsbedingungen erhalten werden, die beim alleinigen Weglassen der EVA-Polymeren und unter sonst gleichen Reaktionsbedingungen solche Polymeren der Monomeren gemäß der allgemeinen Formel II und gegebenenfalls III ergeben, die K-Werte (nach H. Fikentscher, Cellulosechemie, Band 13, Seiten 58-64 und 71-74 (1932)) zwischen 7 und 20, vorzugsweise zwischen 10 und 18 aufweisen, und bei denen die in der Mischung enthaltenen höhermolekularen Pfropfcopolymerisate solchen Pfropfcopolymerisaten entsprechen, wie sie durch Aufpfropfen der Monomeren gemäß der allgemeinen Formel II und gegebenenfalls III auf EVA-Polymeren unter solchen Reaktionsbedingungen erhalten werden, die beim alleinigen Weglassen der EVA-Polymeren und unter sonst gleichen Reaktionsbedingungen solche Polymeren der Monomeren gemäß der allgemeinen Formel II und gegebenenfalls III ergeben, die K-Werte zwischen 20 und 70, vorzugsweise zwischen 25 und 50, aufweisen.

Die erfindungsgemäßen konzentrierten Mischungen werden z.B. in der Weise erhalten, daß die entsprechenden Mengen an niedermolekularem und höhermolekularem Pfropfcopolymerisat bei Temperaturen von zweckmäßig 60 bis 180°C, vorzugsweise 80 bis 150°C in dem organischen Lösungsmittel gemischt werden. Die Temperatur und Reihenfolge der Zugabe wird dabei zweckmäßig so gewählt, daß das

5

niedermolekulare Pfropfcopolymerisat zunächst homogen in dem organischen Lösungsmittel gelöst wird. Anschließend erfolgt der Zusatz des hochmolekularen Polymerisats. Eine weitere Möglichkeit besteht darin, die Polymerisationsreaktion zur Herstellung der Pfropfcopolymerisate so zu lenken, daß das niedermolekulare und höhermolekulare Pfropfcopolymerisat in einem Reaktionsgefäß gebildet werden. Dies kann beispielsweise dadurch erreicht werden, daß in der batch-Fahrweise zuerst mit wenig Initiator bei niedriger Temperatur unter Bildung des hochmolekularen Pfropfcopolymerisats anpolymerisiert wird und dann nach Zusatz von Regler und weiterem Initiator bei höherer Temperatur unter Bildung des niedermolekularen Pfropfcopolymerisats auspolymerisiert wird. Eine weitere Möglichkeit zur Herstellung der konzentrierten Mischungen besteht darin, daß das höhermolekulare Pfropfcopolymerisat in einem Reaktionsgefäß vorgelegt wird und das niedermolekulare Pfropfcopolymerisat in dem Reaktionsgefäß in Anwesenheit des höhermolekularen Pfropfcopolymerisats hergestellt wird.

Die erfindungsgemäßen konzentrierten Mischungen können zusätzlich noch ein den Segmenten A entsprechendes Polymer A enthalten, z.B. in Mengen von 0 bis 50 Gew.%, bezogen auf den Gesamtpolymergehalt der konzentrierten Mischungen. Das kann in der Weise geschehen, daß den konzentrierten Mischungen Polymer A, welches getrennt in analoger Weise wie die Pfropfcopolymerisate durch radikalische polymerisation aus den Monomeren der allgemeinen Formel II und gegebenenfalls III hergestellt worden ist, zugesetzt wird.

Ein Gehalt an Polymer A in den konzentrierten Mischungen kann jedoch auch in der Weise erhalten werden, daß bei der Herstellung der erfindungsgemäßen Pfropfcopolymerisate, im allgemeinen bei der Herstellung der niedermolekularen Pfropfcopolymerisate, ein Teil der Monomeren II und gegebenenfalls III zum Polymer A umgesetzt werden, das ungepfropft bleibt.

Die Erfindung wird durch die folgenden Beispiele näher erläutert:

Beispiele

A) Herstellung der Ester

Beispiel 1

Herstellung eines $C_{16}$- bis $C_{22}$-Alkylacrylats (Ester 1)

1 Mol einer Fettalkoholmischung aus ca. 20 Gew.% n-$C_{16}$-Alkanol, 40 Gew.% n-$C_{18}$-Alkanol, 10 Gew.% n-$C_{20}$-Alkanol und 30 Gew.% n-$C_{22}$-Alkanol, 1 Mol Acrylsäure, 4 mmol Hydrochinonmonomethylether und 5 mmol p-Toluolsulfon-säure wurden mit 25 Gew.%, bezogen auf die Einsatzstoffe Alkanolmischung und Acrylsäure, Toluol versetzt und am Wasserabscheider erhitzt, bis kein Wasser mehr abgeschieden wurde.

Beispiel 2

Herstellung eines $C_{18}$- bis $C_{22}$-Alkylacrylats (Ester 1)

Die Herstellung erfolgte entsprechend dem Beispiel 1, wobei jedoch eine Fettalkoholmischung aus ca. 45 Gew.% n-$C_{18}$-Alkanol, 10 Gew.% n-$C_{20}$-Alkanol und 45 Gew.% n-$C_{22}$-Alkanol verwendet wurde.

B) Herstellung der höhermolekularen Pfropfcopolymerisate

Beispiel 3

Herstellung von Polymer 1 (P1)

200 g Ester 1 (80 gew.%ig in Toluol), 80 g Ethylen-Vinylacetat-Copolymeres (28 gew.% Vinylacetat, Schmelzviskositätsindex nach ASTM 1238 (MFI) = 40 g/10 min) und 20 g Toluol wurden auf 100°C erhitzt und 30 min gerührt, wobei sich eine klare Lösung bildete. Danach wurde bei 85°C in 4 Stunden eine Lösung von 0,6 g tert.-Butylperethylhexanoat in 43 g Toluol unter Stickstoffatmosphäre zudosiert, eine Stunde nachpolymerisiert und mit 137 g Toluol verdünnt. Man erhielt eine hochviskose, ca. 50 gew.%ige Lösung an höhermolekularem Pfropfcopolymerisat, dessen Segmentverhältnis A : E 2 : 1 betrug. Bestimmung des für das gemäß Beispiel 3 erhaltene Pfropfcopolymerisat äquivalenten K-Werts

Zur Charakterisierung des erhaltenen Pfropfcopolymerisats in bezug auf sein Molekulargewicht wurde das Beispiel 3 wiederholt mit der einzigen Abänderung, daß kein Ethylen-Vinylacetat-Copolymeres zugegeben wurde, so daß nur eine Polymerisation des Esters 1 zum Polyacrylsäureester erfolgte. Von dem erhaltenen Polyacrylsäureester wurde nach H.Fikentscher, Cellulosechemie, Band 13, Seiten 58-64 und 71-74 (1932) der K-Wert bestimmt, wobei die Messungen an 2 gew.%igen Lösungen in Xylol bei 25°C durchgeführt wurden. Der K-Wert für den Polyacrylsäureester betrug 28. Dieser K-Wert diente als äquivalenter K-Wert zur Charakterisierung der gemäß Beispiel 3 unter Zugabe des Ethylen-Vinylacetat-Copolymeren erhaltenen höhermolekularen Pfropfcopolymerisats, d.h. der äquivalente K-Wert für das höhermolekulare Pfropfcopolymerisat betrug 28.

Beispiel 4

Herstellung von Polymer 2 (P2)

300 g Ester 1 (80 gew.%ig in Toluol), 60 g Ethylen-Vinylacetat-Copolymeres (28 % Vinylacetat, MFI = 40 g/10 min) und 16 g Toluol wurden auf 100°C erhitzt und 30 min gerührt, worauf sich eine klare Lösung bildete. Danach wurde bei 85°C Innentemperatur unter Stickstoffatmosphäre in 4 Stunden eine Lösung von 0,72 g tert.-Butylperethylhexanoat in 54 g Toluol zudosiert, zwei Stunden nachpolymerisiert und mit 168 g Toluol verdünnt. Man erhielt eine viskose, ca. 50 gew.%ige Lösung an höhermolekularem Pfropfcopolymerisat, dessen Segmentverhältnis A : E 4 : 1 betrug. Entsprechend der Vorschrift des zweiten Absatzes von Beispiel 3 wurde für das erhaltene Pfropfcopolymerisat der äquivalente K-Wert = 31 bestimmt.

Beispiel 5

Herstellung von Polymer 3 (P3)

Man verfuhr wie in Beispiel 4 beschrieben, wobei jedoch anstelle des Esters 1 der Ester 2 eingesetzt wurde. Man erhielt eine viksose, ca. 50 gew.%ige Lösung an höhermolekularem Pfropfcopolymerisat, dessen Segmentverhältnis A : E 4 : 1 betrug. Der äquivalente K-Wert betrug 33.

C) Herstellung der niedermolekularen Pfropfcopolymerisate

Beispiel 6

Herstellung von Polymer 4 (P4)

140 g Ester 1, 56 g Ethylen-Vinylacetat-Copolymeres (28 % Vinylacetat, MFI = 40 g/10 min), 85 g Toluol und 0,5 g Mercaptoethanol wurden auf 110°C erhitzt und 30 min gerührt. Danach wurde in drei Stunden eine Lösung von 0,5 g tert.-Butylperethylhexanoat in 55 g Toluol unter Stickstoffatmosphäre zudosiert und danach eine Stunde nachpolymerisiert. Man erhielt eine ca. 50 gew.%ige Polymerlösung, die bei 110°C homogen war, sich beim Abkühlen jedoch in 2 Phasen trennte. Durch Verdünnen mit Toluol auf eine 10 gew.%ige Polymerlösung erhielt man eine klare Lösung. Das Segmentverhältnis A : E des erhaltenen Pfropfcopolymeren betrug 2 : 1. Der äquivalente K-Wert betrug 13.

Beispiel 7

Herstellung von Polymer 5 (P5)

150 g Ester 1, 30 g Ethylen-Vinylacetat-Copolymeres (28 % Vinylacetat, MFI = 40 g/10 min), 70 g Toluol und 0,6 g Mercaptoethanol wurden auf 110° C erhitzt und 30 min gerührt. Danach wurde in drei Stunden eine Lösung von 0,6 g tert.-Butylperethylhexanat in 50 g Toluol unter Stickstoffatmosphäre zudosiert und danach eine Stunde nachpolymerisiert. Man erhielt eine ca. 50 gew.%ige Polymerlösung, die bei 110° C homogen war, sich beim Abkühlen jedoch in 2 Phasen trennte. Durch Verdünnen mit Toluol auf eine 10 gew.%ige Polymerlösung erhielt man eine klare Lösung. Das Segmentverhältnis A : E des erhaltenen Pfropfcopolymeren betrug 4 : 1. Sein äquivalenter K-Wert betrug 14.

Beispiel 8

Herstellung von Polymer 6 (P6)

Man verfuhr wie in Beispiel 7 beschrieben, wobei jedoch anstelle des Esters 1 der Ester 2 eingesetzt wurde. Das Segmentverhältnis A : E des erhaltenen Pfropfcopolymeren betrug 4 : 1. Der äquivalente K-Wert betrug 14.

D) Herstellung der erfindungsgemäßen konzentrierten Mischungen

Beispiel 9

Herstellung der konzentrierten Mischung 1 (M1)

10 Teile Polymer 4 und 1 Teil Polymer 1 (jeweils 50 gew.%ig in Toluol) wurden 30 min. auf 100° C erhitzt und unter kräftigem Rühren auf Raumtemperatur abgekühlt. Man erhielt eine viskose, schwach trübe Mischung, die beim Stehen nicht absetzte.

Beispiel 10

Herstellung der konzentrierten Mischung 2 (M2)

10 Teile Polymer 5 und 1 Teil Polymer 1 (jeweils 50 gew.%ig in Toluol) wurden 30 min. auf 100° C erhitzt und unter kräftigem Rühren auf Raumtemperatur abgekühlt. Man erhielt eine mittelviskose, leicht trübe Mischung, die beim Stehen nicht absetzte.

Beispiel 11

Herstellung der konzentrierten Mischung 3 (M3)

10 Teile Polymer 6 und 1 Teil Polymer 1 (jeweils 50 gew.%ig in Toluol) wurden 30 min. auf 100° C erhitzt und unter kräftigem Rühren auf Raumtemperatur abgekühlt. Man erhielt eine mittelviskose, leicht trübe Mischung, die beim Stehen nicht absetzte.

Vergleichsversuch 1

Herstellung der Vergleichsmischung 1

10 Teile Polymer 5 (niedermolekulares Pfropfcopolymerisat, 50 gew.%ig in Toluol), 0,8 Teile gemäß dem 2. Absatz von Beispiel 3 erhaltener Polyacrylsäureester, 0,1 Teil Ethylen-Vinylacetat-Copolymeres (28% Vinylacetat, MFI = 40 g/10 min) und 0,1 Teile Toluol wurden 30 min auf 100°C erhitzt und unter kräftigem Rühren abgekühlt. Die Mischung war niederviskos und bei Raumtemperatur zweiphasig. Sie enthielt grobe Gelpartikel, die sich innerhalb weniger Stunden absetzten.

Vergleichsversuch 2

Herstellung der Vergleichsmischung 2

10 Teile Polymer 5 (niedermolekulares Pfropfcopolymerisat, 50 gew.%ig in Toluol) und 1 Teil gemäß dem 2. Absatz von Beispiel 3 erhaltener Polyacrylsäureester wurden 30 min auf 100°C erhitzt und unter kräftigem Rühren abgekühlt. Die Mischung war niederviskos und bei Raumtemperatur zweiphasig. Sie enthielt grobe Gelpartikel, die sich innerhalb weniger Stunden absetzten. Optisch war kein Unterschied zu Vergleichsmischung 2 zu erkennen.

Vergleichsmischung 1 entsprach in ihrer Netto-Zusammensetzung (Polyacrylsäureester/Ethylen-Vinylacetat-Copolymeres/Toluol) der Mischung 2, enthielt jedoch kein höhermolekulares Pfropfcopolymerisat, sondern nur die rein physikalische Mischung der Komponenten.

Aus vergleichsmischung 2 erkennt man, daß der reine Polyacrylsäureester keine lösevermittelnden und dispergierende Eigenschaften aufweist.

Mischungen 1 bis 3 verdeutlichen die hervorragende Eignung der höhermolekularen Pfropfcopolymerisate als Stabilisatoren der niedermolekularen Pfropfcopolymerisate.

E) Pour Point Bestimmungen

Der Pour Point wurde nach ASTM D 97-66 bestimmt. Die Zugabe des jeweiligen Additivs erfolgte durch Einrühren bei 50°C innerhalb 30 Minuten. Die Ergebnisse sind in Tabelle 1 zusammengefasst.

Tabelle 1

| Pour Point Bestimmungen | | | | | | | | | | | |
|---|---|---|---|---|---|---|---|---|---|---|---|
| Ölsorte | ohne Additiv | Zusatzmenge (ppm) | P1 | P2 | P3 | P4 | P5 | P6 | M1 | M2 | M3 |
| Nr. 1 | 39 | 1500 | 33 | 30 | 27 | 27 | 27 | 24 | 24 | 21 | 18 |
| Nr. 2 | 42 | 1000 | - | 24 | 27 | - | 21 | 18 | - | 18 | 12 |
| Nr. 3 | 30 | 500 | - | 21 | 18 | - | 18 | 18 | - | 15 | 12 |

Bei Öl Nr. 1 handelte es sich um ein Rückstandsöl pakistanischer Provenienz, Öl Nr. 2 war ein Rückstandsöl koreanischer Provenienz und Öl Nr. 3 ein Rohöl deutscher Provenienz mit einer API gravity von 36.

Die Spalte "ohne Additiv" weist den Pour Point der jeweiligen Ölsorte ohne Additivzusatz aus. Da sich die Mischungen M1 bis M3 wie folgt zusammensetzen:

M1 = P1 + P4
M2 = P2 + P5
M3 = P3 + P6

ist bei einer Ölsorte die Wirksamkeit von M1 mit der von P1 (höhermolekulares Pfropfcopolymerisat) und P4 (niedermolekulares Pfropfcopolymerisat) und analog die von M2 mit der von P2 und P5 und die von M3 mit der von P3 und P6 zu vergleichen. Man erkennt aus Tabelle 1, daß die niedermolekularen Polymerisate P4, P5 und P6 im allgemeinen bessere Wirksamkeit zeigen als die höhermolekularen Polymerisate P1, P2 und P3. Die jeweils besten Wirksamkeiten wurden bei den erfindungsgemäßen Mischungen M1, M2 und M3

gefunden.

**Ansprüche**

1. Konzentrierte Mischungen, enthaltend (i) ein organisches Lösungsmittel, (ii) ein niedermolekulares Pfropfcopolymerisat der allgemeinen Formel I und (iii) ein höhermolekulares Pfropfcopolymerisat der allgemeinen Formel I

A-E    I,

worin A für ein Segment aus einem Polymeren steht, das zu 70 bis 100 Gew.% aus Monomereneinheiten der allgemeinen Formel II und zu 0 bis 30 Gew.% aus Monomereneinheiten der allgemeinen Formel III besteht

$XHC = CR_1Y$    II

$CH_2 = CR_1Z$    III,

in denen

$R_1$ den Rest H oder $CH_3$ bedeutet,

X den Rest H, COOH oder $COOR_2$ bedeutet,

Y den Rest COOH oder $COOR_2$ bedeutet oder

X und Y für den Anhydridrest CO-O-CO stehen,

Z den Rest $OCOR_2$, $OR_2$, einen heterocyclischen 5- bis 6-gliedrigen Ring oder den Rest $CO-B-D-R_3$ bedeutet,

wobei

$R_2$ den Rest $C_1$- bis $C_{40}$-Alkyl bedeutet,

B den Rest O oder NH bedeutet,

D für eine $C_2$- bis $C_{10}$-Kohlenwasserstoffbrücke steht und

$R_3$ den Rest OH oder $N(R_2)_2$ mit der oben angegebenen Bedeutung für $R_2$ bedeutet,

und worin E für ein Segment aus einem Copolymeren des Ethylens mit Vinylestern von aliphatischen $C_1$- bis $C_{24}$-Carbonsäuren steht, und (iv) gegebenenfalls ein Polymer, welches nur den Segmenten A entspricht.

2. Konzentrierte Mischungen gemäß Anspruch 1, dadurch gekennzeichnet, daß in den Pfropfcopolymerisaten der allgemeinen Formel I das Verhältnis der Segmente A : E zwischen 20 bis 95 Gew.% Segment A und 5 bis 80 Gew.% Segment E liegt.

3. Konzentrierte Mischungen gemäß Anspruch 1 und 2, dadurch gekennzeichnet, daß das Gewichtsverhältnis des niedermolekularen Pfropfcopolymerisats zum höhermolekularen Pfropfcopolymerisat 1 : 10 bis 100 : 1 beträgt.

4. Konzentrierte Mischungen gemäß den Ansprüchen 1 bis 3, dadurch gekennzeichnet, daß die Pfropfcopolymerisate der allgemeinen Formel I durch Aufpropfen der Monomeren gemäß der allgemeinen Formel II und gegebenenfalls III auf Copolymeren des Ethylens mit Vinylestern von $C_1$- bis $C_{24}$-Carbonsäuren (EVA-Polymer) hergestellt werden.

5. Konzentrierte Mischungen gemäß den Ansprüchen 1 bis 4, dadurch gekennzeichnet, daß die in der Mischung enthaltenen niedermolekularen Pfropfcopolymerisate solchen Pfropfcopolymerisaten entsprechen, wie sie durch Aufpropfen der Monomeren gemäß der allgemeinen Formel II und gegebenenfalls III auf EVA-Polymeren unter solchen Reaktionsbedingungen erhalten werden, die beim alleinigen Weglassen der EVA-Polymeren und unter sonst gleichen Reaktionsbedingungen solche Polymeren der Monomeren gemäß der allgemeinen Formel II und gegebenenfalls III ergeben, die K-werte (nach H. Fikentscher, Cellulosechemie, Band 13, Seiten 58-64 und 71-74 (1932)) zwischen 7 und 20 aufweisen.

6. Konzentrierte Mischungen gemäß den Ansprüchen 1 bis 5, dadurch gekennzeichnet, daß die in der Mischung enthaltenen höhermolekularen Pfropfcopolymerisate solchen Pfropfcopolymerisaten entsprechen, wie sie durch Aufpropfen der Monomeren gemäß der allgemeinen Formel II und gegebenenfalls III auf EVA-Polymeren unter solchen Reaktionsbedingungen erhalten werden, die beim alleinigen Weglassen der EVA-Polymeren und unter sonst gleichen Reaktionsbedingungen solche Polymeren der Monomeren gemäß der allgemeinen Formel II und gegebenenfalls III ergeben, die K-Werte (nach H. Fikentscher, Cellulosechemie, Band 13, Seiten 58-64 und 71-74 (1932)) zwischen 20 und 70 aufweisen.

7. Konzentrierte Mischungen gemäß den Ansprüchen 1 bis 6, dadurch gekennzeichnet, daß der Gesamtpolymergehalt der Mischung 20 bis 70 Gew.% beträgt.

8. Verwendung der Mischungen gemäß den Ansprüchen 1 bis 7 als Fließverbesserer und Stockpunktserniedriger für Rohöle, Rückstandsöle und Mitteldestillate.